Europäisches Patentamt

(19) European Patent Office

Office européen des brevets

(11) Publication number: **0 008 601**
**B1**

## EUROPEAN PATENT SPECIFICATION

(45) Date of publication of patent specification: 25.08.82

(51) Int. Cl.³: **C 05 F 9/02**

(21) Application number: **78900168.2**

(22) Date of filing: **09.10.78**

(86) International application number:
**PCT/JP78/00006**

(87) International publication number:
**WO 79/00216 03.05.79 Gazette 79/9**

(54) COMPOST MAKING APPARATUS.

(30) Priority: **08.10.77 JP 121049/77**

(43) Date of publication of application:
**19.03.80 Bulletin 80/6**

(45) Publication of the grant of the patent:
**25.08.82 Bulletin 82/34**

(84) Designated Contracting States:
**FR**

(56) References cited:
BE - A - 813 056
DE - A - 2 426 285
FR - A - 1 142 036
FR - A - 1 515 803
GB - A - 1 001 028
JP - A - 5 386 373
JP - A - 52 107 969
JP - A - 52 112 567
JP - B - 4 121 728
JP - U - 51 040 135
JP - Y - 36 019 302

(73) Proprietor: **EBARA CORPORATION**
**11-1, Haneda Asahi-cho**
**Ota-ku, Tokyo, 144 (JP)**

(72) Inventor: **ITOH, Kanichi Ebara Corporation**
**11-1, Hanedaasahicho, Ota-ku**
**Tokyo, 144 (JP)**
Inventor: **HIRAYAMA, Yoshio Ebara Corporation**
**11-1, Hanedaasahicho, Ota-ku**
**Tokyo, 144 (JP)**
Inventor: **KODAIRA, Masanori Ebara Corporation**
**11-1, Hanedaasahicho, Ota-ku**
**Tokyo, 144 (JP)**

(74) Representative: **Lavoix, Jean et al,**
**c/o Cabinet Lavoix 2, Place D'Estienne D'Orves**
**F-75441 Paris Cedex 09 (FR)**

(56) References cited:
US - A - 2 639 902
US - A - 3 736 120
US - A - 3 756 784

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Compost making apparatus

### Technical field

The present invention relates generally to treatment of refuse and, more particularly, to a composting apparatus for converting organic materials in municipal refuse, such as kitchen refuse, into compost.

### Background Art

There have been various approaches to treatment of municipal refuse. In view of the fact that using refuse as landfill or incineration of refuse causes secondary problems, recent practical methods of municipal refuse treatment have been to reduce the volume of refuse or to treat the refuse for reuse as a resource. Particularly, the method of sorting municipal refuse for reuse has become more and more prevailing. Kitchen refuse which has been sorted out by the sorting method or kitchen refuse collected initially as such can be effectively converted into compost. Obviously the treatment capacity of a composting apparatus per unit area required for installing the apparatus can be made higher by increasing the height of the pile of the material. In practical operation, however, when the pile of the material is too high the material packs down into a mass in which air permeability is reduced, thereby retarding aerobic fermentation therein. This tendency is significant in material having a relatively high water content, such as kitchen refuse, organic sludge, and the like. The known multistage vertical cylindrical composting apparatus comprising a plurality of horizontal floors in which material is allowed to fall successively to the floor below can reduce the height of composting material on each floor by the number of the stages relative to the single-stage compost-apparatus and can, accordingly, eliminate some of the disadvantages mentioned above and increase the treatment capacity of the apparatus.

However, the conventional multistage vertical cylindrical composting apparatus, in which the material is moved by a rake rotating about a cylindrical shaft in conjunction with some agitation has disadvantages in that substantial agitation of the material is not performed and relatively much power is required to rotate the rake of a large radius while shearing the material between the rake and the floor. Another disadvantage of the material raking operation on the floor is that it tends to consolidate the material into dense masses resulting in insufficient agitation particularly in material of high water content, thereby retarding fermentation of the material. Consequently, in the conventional composting apparatus it is impossible to increase the height of the material in each stage and expect the agitation effect provided by the rake.

US—A—3,736,120 discloses in Fig. 20 a digesting tank in which rotary agitator units rotate about the vertical central axis of the tank over the floor of each stage. In each agitator unit, the agitators revolve about an axis of the unit in an anticlockwise direction as this axis rotates in a clockwise direction about the vertical central axis of the tank, since the agitators are made to revolve about the axis of the unit by gears which roll along a circular rack provided on the respective floor. Thus the agitators scrape the material on the floor in a downward direction and do not effectively break up and throw the material in the upward and rearward direction as the agitator units rotate over the floor so that this material is unsufficiently aerated and aerobic fermentation thereof is unsatisfactory.

### Disclosure of Invention

An object of the present invention is to avoid the disadvantages of a rake and to provide an arrangement of relatively rotating floors and rotary agitator units which is an improvement over the aforementioned general type of apparatus disclosed in said US—A—3,736,120 in that the material scraped up by the agitator units is broken into small lumps having considerably increased surface areas so as to be sufficiently aerated as they are thrown upwardly and rearwardly by the rotating agitator units and are piled on the floor very slowly and loosely resulting in a very satisfactory aerobic fermentation.

The present invention provides a multistage composting apparatus comprising a plurality of horizontal floors and at least one set of agitator units provided for each floor and having beaters revolving about a first axis of each unit, said agitator units and their respective floors being supported so as to be rotatable relative to each other about the central axis of a multistage vertical cylindrical tank allowing composting material to fall successively from one floor onto the floor below, whereby the agitator units are made to advance into the composting material carried by the floors, said apparatus being characterized in that the beaters scrape the composting material in circular paths about said central axis and in that the direction of rotation of the beaters about said first axis is such that on the leading side of the agitator units relative to the direction of advance of the agitator units into the composting material the beaters scrape the composting material in an upward motion about said first axis and throw the scraped-up composting material substantially toward the trailing side of the agitator units.

### Brief Description of Drawings

Fig. 1 is a vertical sectional view of an embodiment of the present invention;

Fig. 2 is a sectional view taken along the line II—II of Fig. 1;

Fig. 3 is a development view of a section taken along the circle III of Fig. 2;

Fig. 4 is a view illustrative of operation of beaters;

Fig. 5 is a view illustrative of operation of the beaters of a modification of said embodiment in which two stages of agitator units are provided;

Fig. 6 is a vertical sectional view of another embodiment of the present invention;

Fig. 7 is a sectional view taken along the line VII—VII of Fig. 6;

Fig. 8 is a view taken in the direction of the arrow VIII of Fig. 6;

Fig. 9 is a view illustrative of operation of beaters of the embodiment of Fig. 6.

Best Mode for Carrying Out the Invention

The present invention will now be described with reference to the drawings.

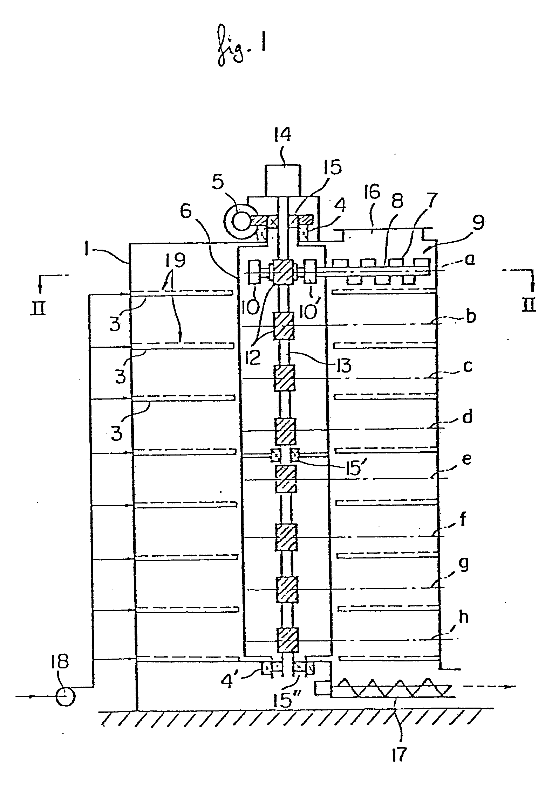

Figs. 1 to 4 show a multistage composting apparatus comprising a series of horizontal floors 3 each floor having a compost falling opening 2, a vertical cylindrical tank 1 inside of which a plurality of said horizontal floors 3 is fixed to make a corresponding number of stages, a rotary agitator shaft 8 being disposed above each horizontal floor 3 and in parallel therewith, beaters 7 revolving about the agitator shaft 8, and a vertical rotary main shaft 6 supporting said agitator shafts 8 and rotating about the axis of said vertical cylindrical tank 1. Inside the vertical cylindrical tank 1 a series of the horizontal floors 3 is fixed. The vertical rotary main shaft 6 which is supported through upper and lower bearings 4 and 4' is provided along the central axis of the vertical cylindrical tank 1 and is rotated by a driving device 5. A plurality of the beaters 7 is attached to each of the horizontally rotating agitator shafts 8 in the longitudinal direction thereof corresponding to horizontal axes (a), (b), ----- (h) above the horizontal floors 3, respectively. The agitator shafts 8 are hung from the main shaft 6 and supported by bearings 10 and 10' integral therewith to form an agitator unit 9 over each of the horizontal floors 3. A plurality of the agitator units 9 may be used in radial arrangement for each stage of the horizontal floors 3.

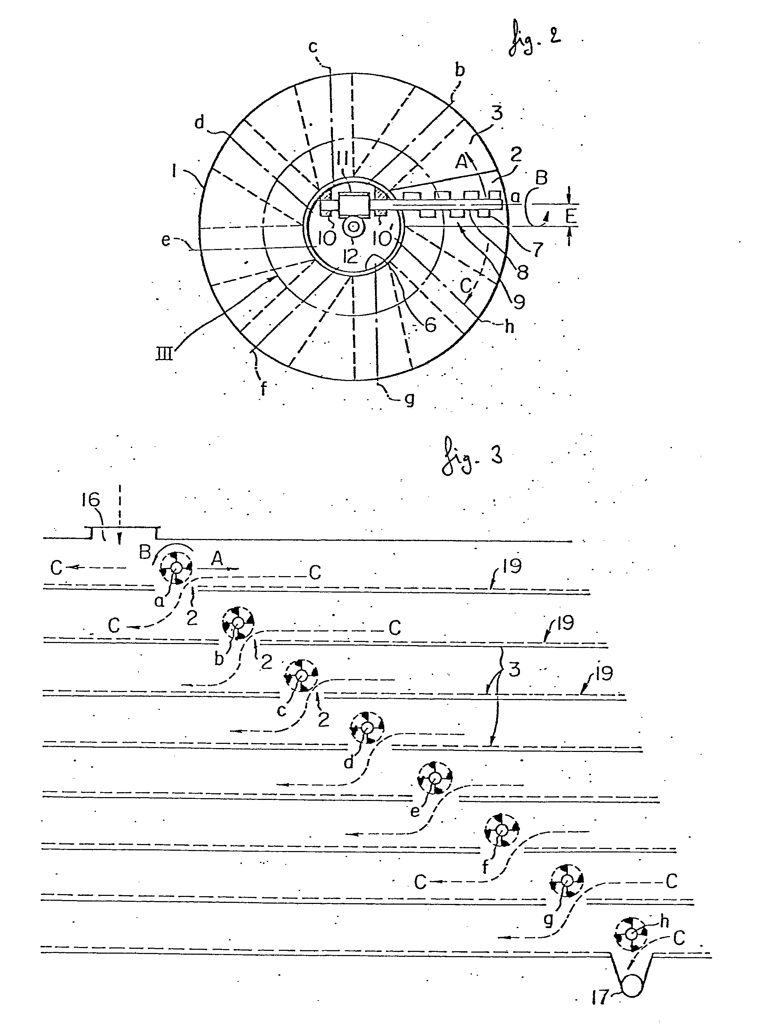

The agitator shafts 8 are not exactly radial but "substantially radial" with respect to the main shaft 6 because the agitator shafts 8 are, as shown in Fig. 2, attached thereto with a slight degree of eccentricity E. The axes of the agitator shafts 8 are, when seen in plane projection as shown in Fig. 2, disposed out of phase and with substantially equal pitch phase distance so that the agitator shafts 8 are rotated in the direction of the arrow A (in the anticlockwise direction) by the rotation of the main shaft 6.

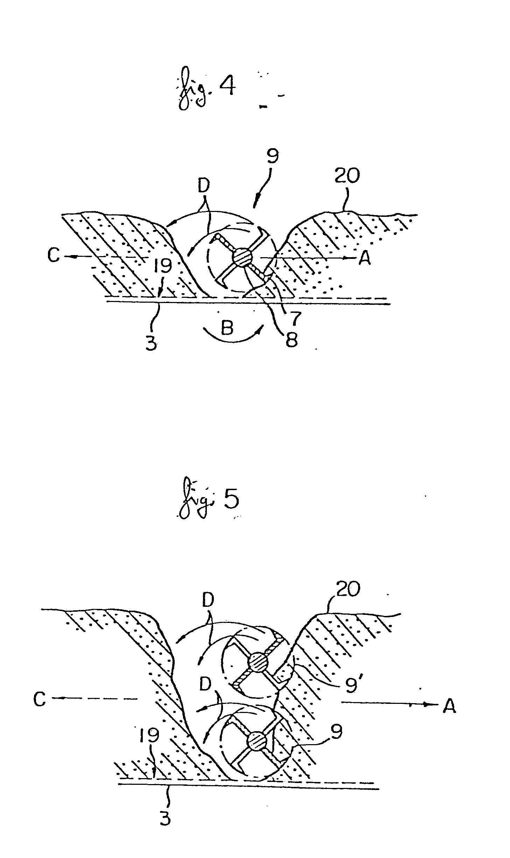

The compost falling opening 2 in each stage of the horizontal floors 3 is provided for allowing the compost to fall successively to the next lower stage of the floors 3. The compost falling openings 2 are, when seen in plane projection, out of phase as shown in Figs. 2 and 3 in the same manner as are the agitator shaft axes so that, assuming that the direction of advancement indicated by the arrow A of the agitator unit 9 is positive, the compost falling openings 2 of the successively lower horizontal floors 3 are disposed in the positive direction relative to compost falling openings 2 of the successively upper horizontal floors 3. In this embodiment, since the pitch of the agitator shaft 8 is the same as the pitch of the compost falling openings 2, the agitator shafts 8 are simultaneously brought to the positions above the compost falling openings 2, respectively, as shown in Figs. 2 and 3.

The agitator shafts 8 are connected to and driven by a driving motor 14 for revolving beaters through helical gears 11 and 12 and a driving shaft 13. The driving shaft 13 is supported concentrically with the main shaft 6 through bearings 15, 15' and 15''.

Numeral 16 denotes a material charging hole, 17 denotes a compost discharge screw, and 18 denotes a blower for supplying air through the interior of each floor 3 to a plurality of air holes 19 provided in the upper surfaces of each of the horizontal floors 3.

The state shown in Figs. 2 and 3, namely the state in which an axis, for example, the axis (b) is in an advanced position relative to the axis (a) of the upper stage with respect to the direction of rotation is herein referred to with the meaning that the axis (b) is in the plus direction relative to the axis (a) in the sense of the polar coordinate.

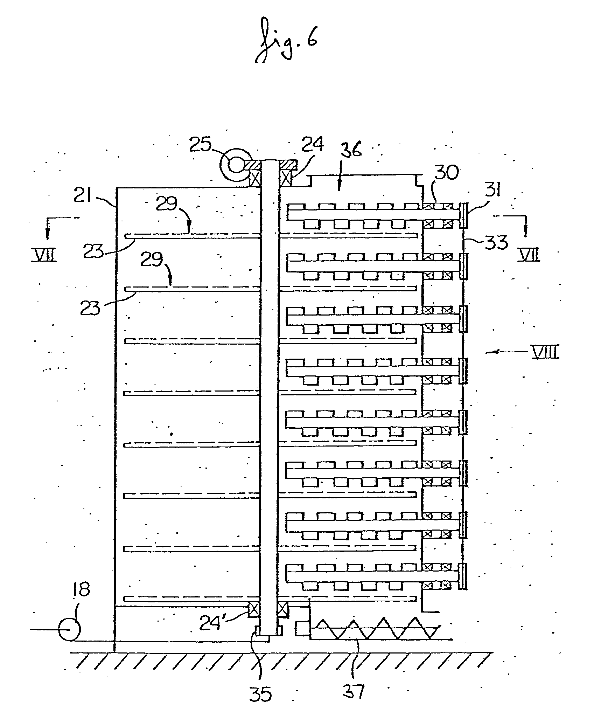

The operational effects of the embodiment of the construction described above will now be explained. When the main shaft 6 is rotated in the direction of the arrow A by the main shaft driving device 5 and, at the same time, the central shaft of the rotary agitator unit 9 is rotated in the direction of the arrow B by the motor 14, material 20 for compost on each of the horizontal floors 3 is scraped up by the beaters 7 and sent back in the paths D shown in Fig. 4 to receive sufficient agitating effect and is moved in the direction of arrow C, opposite to the direction of arrow A. In this way, the compost material 20 supplied through the material charging hole 16 is moved gradually on each horizontal floor 3 until it falls through the falling opening 2 to the lower floors 3 successively and is finally discharged out of the cylindrical tank 1 by the discharge screw 17. This operation is schematically illustrated in the developed drawing of Fig. 3, in which the material 20 charged through the hole 16 onto the uppermost floor 3 is moved in the path shown by the broken line in the direction of the arrow C around the floor until it falls through the falling opening 2 onto the next lower floor 3 successively where the same operation is repeated until it finally reaches the discharge screw 17.

Accordingly, even in the case where the composting material is piled up so high or for so long a period of time as to pack down into an air-impermeable mass as frequently happens with material containing a high percentage of water, the material is scraped up by the tips of the beaters 7 and broken into small lumps having considerably increased surface areas so as to be sufficiently aerated by the upward air flow from the air holes 19 while flying in the air, and then piled on the floor very slowly and loosely with the result that the material particles are brought into uniform contact with the air supplied from the air holes 19 and that very satisfactory aerobic fermentation can be carried out. The slow and loose piling of the material provides an advantage of reduction in air resistance, namely reduction in the power required for the blower 18. Penetrating depth of the beaters for scraping up of the composting material 20, i.e. lump size of the scraped composting material 20 can be arbitrarily varied by suitably selecting the speed of rotation of the beater central shaft 8 relative to the speed of rotation of the main shaft 6. Further, since the composting material 20 is removed by the revolving beaters 7, the rotational resistance of the main shaft 6 is significantly reduced, resulting in a substantial reduction in the power required compared to the conventional apparatus with a rake.

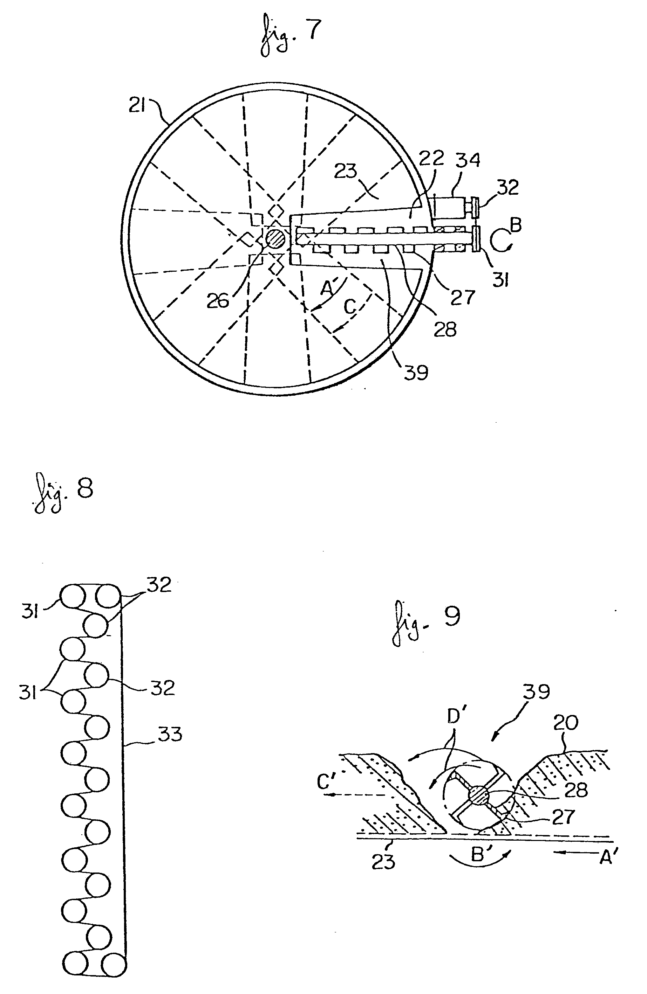

A plurality of agitator units 9 and 9' may be provided for each stage of the floors as shown in Fig. 5 for the purpose of increasing the height of the composting material to be piled on each stage of the floors. The operational effect accomplished by this modification is similar to that of the embodiment described above.

Figs. 6 to 9 illustrate another embodiment of the composting apparatus according to the present invention, comprising a vertical cylindrical tank 21, a multi-stage horizontal floors 23 rotatable about the axis of said cylindrical tank 21 and each having a compost falling opening 22, and beaters 27 provided on the horizontal rotary agitator shafts 28 above the horizontal floors 23, respectively, the shafts being journaled on the vertical cylindrical tank 21 and revolvable their axes being stationary with respect to the ground.

At the center of the vertical cylindrical tank 21 is provided a main shaft 26 supported by upper and lower bearings 24 and 24' to the vertical cylindrical tank 21 and rotated by a main shaft driving device 25. A plurality of the horizontal floors 23 is fixed to the main shaft 26. The upper surface of each of the horizontal floors 23 is provided with air holes 29 through which air is supplied by a blower 18 through an air passage (not shown) in a rotary coupling 35 and in the center of the main shaft 26. The compost falling openings 22 are provided in the horizontal floors 23 at positions out of phase by an equally spaced pitch successively from stage to stage as in the aforedescribed embodiment. Above each of the horizontal floors 23 is a rotary agitator unit 39 comprising a horizontal agitator shaft 28 and beaters 27. The agitator shaft 28 of said unit is supported by a bearing 30 to the cylindrical tank 21 and is rotated by a motor 34 through sprocket wheels 31 and 32 and a chain 33 arranged as shown in Fig. 8. In the drawings, numeral 36 denotes a material charging hole and 37 denotes a compost discharge screw, respectively.

In operation, when the main shaft 26 is rotated by the main shaft driving device 25 in the direction of an arrow A' and, at the same time, the agitator shafts 28 of the agitator units 39 are rotated by the motor 34 in the direction of an arrow B', the composting material 20 piled up on each of the horizontal floors 23 is scraped up by the beaters 27 as in the aforedescribed embodiment, sent back in the path D' shown in Fig. 9, and moved in the direction of A', namely in the direction of an arrow C' around the horizontal floor 23 until it falls through the compost falling opening 22 to the lower floors 23 successively and is finally discharged out of the cylindrical tank 21 by the compost discharge screw 37. The effects provided by this operation are the same as those explained with respect to the aforedescribed embodiment.

Results of experimental operations of the apparatus according to the present invention will now be described.

The material used in the experimental operations was municipal refuse having the components shown in Table 1:

Table 1

|  | (dry base %) |
| --- | --- |
| Kitchen refuse | 33.0 |
| Paper | 43.9 |
| Glass | 10.8 |
| Metal | 0.6 |
| Plastics | 7.0 |
| Other | 4.7 |

An apparatus of the type corresponding to that of Fig. 1 was used. Dimensions of the apparatus used in the test operations were as follows:

Cylindrical tank:
Inside diameter          6 meters
Height                   7.5 meters
Number of stages: 4
Speed of rotation of the main shaft:
15 minutes per revolution

Speed of rotation of the driving shaft: 140 r.p.m.

Amount of air blown: 0.2 m³/min.

Each day, five hundred kilograms of the material having the components shown in Table 1 was divided into three batches and charged in the apparatus having the dimensions mentioned above. For each batch, the apparatus was operated for the period of time required to make one rotation of the main shaft. The depth of each batch piled on the floor was approximately 600 millimeters. The experimental operation was carried out for the period of fourteen days with the results shown in Table 2:

Table 2

Charged Material

| | |
|---|---|
| Total weight | 6.9 ton |
| Total volume | 15.6 m³ |
| Apparent specific gravity | 0.44 ton/m³ |
| Water content | 54.5% |

Discharged Material

| | |
|---|---|
| Total weight | 4.5 ton |
| Total volume | 7.9 m³ |
| Apparent specific gravity | 0.57 ton/m³ |
| Water content | 52.2% |

Amount of change

| | |
|---|---|
| Lost weight | 2.4 ton |
| Ratio of weight reduction | 65% |
| Ratio of volume reduction | 51% |
| Weight reduction (dry base) | 68% |

In the experimental operation, the temperature of the material fell by 10—15°C during agitation, but the temperature of the material was restored to the same as that sensed before the agitation in approximately five hours. The highest temperature of the material sensed during the experimental operation reached 77°C.

In composting municipal refuse having the components shown in Table 1, those components not suitable for compost such as metal, glass and the like must, of course, be separated from the material for compost.

The aforementioned dimensions of the apparatus and the conditions used for the experimental operation such as the number of rotation, period of time of operation, interval of operation, and the like are solely for illustrative purposes and can be changed in accordance with the specific requirements.

While the apparatus according to the present invention has been described hereinabove in connection with the case of composting of municipal refuse such as kitchen refuse, it is to be clearly understood that this description is made only by way of example not as a limitation on the type of material to be treated thereby. In fact, the apparatus according to the present invention is applicable to any organic material that is suitable for composting.

**Claims**

1. A multistage composting apparatus comprising a plurality of horizontal floors and at least one set of agitator units provided for each floor and having beaters revolving about a first axis of each unit, said agitator units and their respective floors being supported so as to be rotatable relative to each other about the central axis of a multistage vertical cylindrical tank allowing composting material to fall successively from one floor onto the floor below, whereby the agitator units are made to advance into the composting material carried by the floors, said apparatus being characterized in that the beaters scrape the composting material in circular paths about said central axis and in that the direction of rotation of the beaters about said first axis is such that on the leading side of the agitator units relative to the direction of advance of the agitator units into the composting material the beaters scrape the composting material in an upward motion about said first axis and throw the scraped-up composting material substantially toward the trailing side of the agitator units.

2. A composting apparatus as set forth in Claim 1, in which said horizontal floors are fixed to said cylindrical tank and said agitator units are supported so as to be rotatable about the central axis of said cylindrical tank.

3. A composting apparatus as set forth in Claim 2, in which said agitator units are attached to a vertical rotary shaft provided perpendicularly at the center of the cylinder so as to be rotatable.

4. A composting apparatus as set forth in Claim 1, in which said horizontal floors are supported so as to be rotatable about the central axis of said cylindrical tank and (axes of) said agitator units are stationary relative to the ground.

5. A composting apparatus as set forth in Claim 4, in which said horizontal floors are attached to the vertical rotary shaft provided perpendicularly at the central axis of the cylinder of said cylindrical tank so as to be rotatable, said cylindrical tank being stationary relative to the ground, and (axes of) said agitator units being fixed to said cylindrical tank.

6. A composting apparatus as set forth in any of Claims 1 to 5, in which each of said agitator units is provided with a plurality of beaters attached to a rotary horizontal shaft supported rotatably, said beaters being distributed longitudinally along said horizontal shaft.

7. A composting apparatus as set forth in Claim 6, in which said rotary horizontal shafts of said agitator units are disposed radially or substantially radially relative to the central axis of said cylindrical tank.

8. A composting apparatus as set forth in Claim 7, in which said rotary horizontal shafts are disposed in different phases in plane projection from each other on each of said horizontal floors.

9. A composting apparatus as set forth in any of Claim 1 to Claim 8, in which each of said horizontal floors is provided with an opening through which the composting material can fall to the horizontal floor below and said falling openings are slot-like openings disposed radially or substantially radially with respect to the central axis of said cylindrical tank.

10. A composting apparatus as set forth in Claim 9, in which said slot-like openings are disposed in different phases in plane projection from each other on each of said horizontal floors.

11. A composting apparatus as set forth in Claim 10, in which the phases of said slot-like openings are such that the slot-like opening of a lower horizontal floor is disposed in a position in advance of that of the phase of the slot-like opening of the horizontal floor immediately above said lower horizontal floor, assuming that the advancing direction of said agitator units is the positive direction with respect to the polar coordinate fixed to said horizontal floor.

12. A composting apparatus as set forth in any of Claims 1 to 11, in which each of said horizontal floors is provided with a plurality of sets of agitator units arranged in the vertical direction.

13. A composting apparatus as set forth in any of Claim 8 to Claim 12, in which the horizontal rotary shafts of lower stages are disposed in plus direction with respect to the horizontal rotary shafts of upper stages in the sense of polar coordinate.

**Revendications**

1. Appareil de transformation en compost à étages multiples comprenant plusieurs planchers horizontaux et au moins un jeu d'unités agitatrices prévu pour chaque plancher, chaque unité comprenant des batteurs qui tournent autour d'un premier axe de cette unité, lesdites unités agitatrices et leurs planchers respectifs étant supportés de manière à pouvoir tourner les uns par rapport aux autres autour de l'axe central d'une cuve cylindrique verticale à étages multiples en permettant à la matière à transformer en compost de tomber successivement d'un plancher sur le plancher immédiatement inférieur, de sorte que les unités agitatrices sont ainsi contraintes à avancer dans la matière à transformer portée par les planchers, cet appareil étant caractérisé en ce que les batteurs raclent la matière à transformer suivant des trajectoires circulaires autour dudit axe central, et en ce que le sens de rotation des batteurs autour dudit premier axe (a, b, c, d, e, g, h) est tel que, sur le côté avant des unités agitatrices, considéré dans le sens de l'avance des unités agitatrices dans la matière à transformer, les batteurs râclent la matière à transformer de bas en haut autour du premier axe et projettent la matière à transformer ainsi râclée à peu près vers le côté arrière des unités agitatrices.

2. Appareil à compost suivant la revendication 1, caractérisé en ce que les planchers horizontaux sont fixés à ladite cuve cylindrique, et en ce que les unités agitatrices sont supportées de manière à pouvoir tourner autour de l'axe central de ladite cuve cylindrique.

3. Appareil à compost suivant la revendication 2, caractérisé en ce que les unités agitatrices sont fixées à un arbre rotatif vertical monté perpendiculairement dans l'axe du cylindre de la cuve de manière à pouvoir tourner.

4. Appareil à compost suivant la revendication 1, caractérisé en ce que lesdits planchers horizontaux sont supportés de manière à pouvoir tourner autour de l'axe central de ladite cuve cylindrique, et en ce que les axes des unités agitatrices sont fixes par rapport au sol.

5. Appareil à compost suivant la revendication 4, caractérisé en ce que lesdits planchers horizontaux sont fixés à l'arbre rotatif vertical monté perpendiculairement dans l'axe central du cylindre de ladite cuve cylindrique de manière à pouvoir tourner ladite cuve cylindrique étant fixe par rapport au sol et les axes des unités agitatrices étant fixes par rapport à la cuve cylindrique.

6. Appareil à compost suivant l'une quelconque des revendications 1 à 5, caractérisé en ce que chacune des unités agitatrices est munie d'une série de batteurs fixés à un arbre horizontal rotatif monté à rotation, lesdits batteurs étant répartis sur la longueur dudit arbre horizontal.

7. Appareil à compost suivant la revendication 6, caractérisé en ce que lesdits arbres horizontaux rotatifs des unités agitatrices sont disposés radialement ou à peu près radialement par rapport à l'axe central de la cuve cylindrique.

8. Appareil à compost suivant la revendication 7, caractérisé en ce que lesdits arbres horizontaux rotatifs sont disposés avec un décalage les uns par rapport aux autres dans une projection en plan sur chacun desdits planchers horizontaux.

9. Appareil à compost suivant l'une quelconque des revendications 1 à 8, caractérisé en ce que chacun des planchers horizontaux est muni d'une ouverture à travers laquelle la matière à transformer peut tomber sur le plancher horizontal situé au-desous, et en ce que lesdites ouvertures de chute sont des ouvertures en forme de fente disposées radialement ou à peu près radialement par rapport à l'axe central de la cuve cylindrique.

10. Appareil à compost suivant la revendication 9, caractérisé en ce que lesdites ouvertures en forme de fentes sont prévues dans chacun des planchers horizontaux avec un décalage mutuel dans la projection en plan.

11. Appareil à compost suivant la revendication 10, caractérisé en ce que les décalages desdits ouvertures en forme de fentes sont tels que l'ouverture en forme de fente du plancher horizontal situé au-dessous d'un plancher considéré est situé en avant de l'ouverture en forme de fente du plancher horizontal immédiatement supérieur, si l'on suppose que le sens de l'avance des unités agitatrices est le sens positif par rapport à des coordonnées polaires liées auxdits planchers horizontaux.

12. Appareil à compost suivant l'une quelconque des revendications 1 à 11, caractérisé en ce que chacun des planchers horizontaux est muni de plusieurs jeux d'unités agitatrices superposées.

13. Appareil à compost suivant l'une quelconque des revendications 8 à 12, caractérisé en ce que les arbres rotatifs horizontaux d'un étage sont disposés en avant, dans le sens positif, par rapport aux arbres rotatifs horizontaux des étages supérieurs, considéré dans le sens positif adopté pour les coordonnées polaires.

## Patentansprüche

1. Mehrstufige Vorrichtung zur Herstellung von Kompost mit mehreren horizontalen Böden und mindestens einem für jeden Boden vorgesehenen Satz Agitatoreinheiten, welche um eine erste Achse einer jeden Einheit drehende Flügel haben, wobei die Agitatoreinheiten und ihre jeweiligen Böden so gehaltert sind, daß sie relativ zueinander um die Mittelachse eines mehrstufigen vertikalen zylindrischen Tanks drehbar sind, der das Herabfallen des Kompostierungsmaterials nacheinander von einem Boden auf den darunterliegenden Boden ermöglicht, wodurch die Agitatoreinheiten derart ausgebildet sind, daß sie das von den Böden getragene Kompostierungsmaterial vortreiben, dadurch gekennzeichnet, daß die Flügel das Kompostierungsmaterial in kreisförmigen Bahnen um die Mittelachse herum räumen und daß die Drehrichtung der Flügel um die erste Achse derart ist, daß die Flügel das Kompostierungsmaterial an der in Vortriebsrichtung der Agitatoreinheiten in das Kompostierungsmaterial vorne liegenden Seite der Agitatoreinheiten in einer Aufwärtsbewegung um die erste Achse räumen und das nach oben geräumte Kompostierungsmaterial im wesentlichen zur rückwärtigen Seite der Agitatoreinheiten werfen.

2. Vorrichtung nach Anspruch 1, bei welcher die horizontalen Böden an einem zylindrischen Tank befestigt und die Agitatoreinheiten so gehaltert sind, daß sie um die Mittelachse des zylindrischen Tanks drehbar sind.

3. Vorrichtung nach Anspruch 2, bei welchem die Agitatoreinheiten an einer vertikalen Rotationswelle befestigt sind, die senkrecht in der Mitte des Zylinders derart vorgesehen ist, daß sie drehbar ist.

4. Vorrichtung nach Anspruch 1, bei der die horizontalen Böden derart gehaltert sind, daß sie um die Mittelachse des zylindrischen Tanks drehbar sind und die (Achsen der) Agitatoreinheiten relativ zum Boden stationär sind.

5. Vorrichtung nach Anspruch 4, bei welcher die horizontalen Böden an der senkrecht in der Mittelachse des Zylinders des zylindrischen Tanks drehbar vorgesehenen vertikalen Rotationswelle befestigt sind, der zylindrische Tank in bezug auf den Boden stationär ist, und die (Achsen der) Agitatoreinheiten an dem zylindrischen Tank befestigt sind.

6. Vorrichtung nach einem der Ansprüche 1 bis 5, bei welcher jede der Agitatoreinheiten mit mehreren an einer drehbar gelagerten horizontalen Rotationswelle befestigten Flügeln versehen ist, wobei die Flügel in Längsrichtung entlang der horizontalen Welle verteilt sind.

7. Vorrichtung nach Anspruch 6, bei welcher die horizontalen Rotationswellen der Agitatoreinheiten radial oder im wesentlichen radial in bezug auf die Mittelachse des zylindrischen Tanks angeordnet sind.

8. Vorrichtung nach Anspruch 7, bei welcher die horizontalen Rotationswellen in Projektion in unterschiedlichen Phasen zueinander an jedem der horizontalen Böden angeordnet sind.

9. Vorrichtung nach einem der Ansprüche 1 bis 8, bei welcher jeder der horizontalen Böden mit einer Öffnung versehen ist, durch die das Kompostierungsmaterial auf den darunterliegenden horizontalen Boden herabfallen kann und die Fallöffnungen schlitzähnliche Öffnungen sind, die radial oder im wesentlichen radial in bezug auf die Mittelachse des zylindrischen Tanks angeordnet sind.

10. Vorrichtung nach Anspruch 9, bei welcher die schlitzähnlichen Öffnungen in Projektion in unterschiedlichen Phasen zueinander an jedem der horizontalen Böden angeordnet sind.

11. Vorrichtung nach Anspruch 10, bei welcher die Phasen der schlitzähnlichen Öffnungen derart sind, daß die schlitzähnliche Öffnung eines unteren horizontalen Bodens in einer voreilenden Position zu derjenigen der Phase der schlitzähnlichen Öffnung des unmittelbar über dem unteren horizontalen Boden liegenden horizontalen Bodens ist, unter der Annahme, daß die Laufrichtung der Agitatoreinheiten die positive Richtung in bezug auf die zu dem horizontalen Boden feste Polarkoordinate ist.

12. Vorrichtung nach einem der Ansprüche 1 bis 11, bei welcher jeder der horizontalen Böden mit mehreren in vertikaler Richtung angeordneten Gruppen von Agitatoreinheiten versehen ist.

13. Vorrichtung nach einem der Ansprüche 8 bis 12, bei welcher die horizontalen Rotationswellen der unteren Stufen in Plus-Richtung in bezug auf die horizontalen Rotationswellen der oberen Stufen im Polarkoordinatensinne angeordnet sind.

fig. 1

fig. 2

fig. 3

fig. 4

fig. 5

fig. 6

fig. 7

fig. 8

fig. 9